(19) Europäisches Patentamt
European Patent Office
Office européen des brevets

(11) Numéro de publication: **0 390 706 A1**

(12) **DEMANDE DE BREVET EUROPEEN**

(21) Numéro de dépôt: **90420124.1**

(22) Date de dépôt: **08.03.90**

(51) Int. Cl.⁵: **C08L 83/04, C08L 33/02, C08K 5/54**

(30) Priorité: **23.03.89 FR 8904113**

(43) Date de publication de la demande: **03.10.90 Bulletin 90/40**

(84) Etats contractants désignés: **AT BE CH DE DK ES FR GB GR IT LI LU NL SE**

(71) Demandeur: **RHONE-POULENC CHIMIE**
**25, quai Paul Doumer**
**F-92408 Courbevoie Cédex(FR)**

(72) Inventeur: **Peccoux, Pierre-Michel**
**71, rue Henri Gorjus**
**F-69004 Lyon(FR)**
Inventeur: **Schorsch, Gilbert**
**9, rue du Sellier**
**F-92700 Colombes(FR)**

(74) Mandataire: **Seugnet, Jean Louis et al**
**RHONE-POULENC CHIMIE Service Brevets Chimie Centre de Recherches des Carrières**
**B.P. 62**
**F-69192 Saint-Fons Cédex(FR)**

(54) **Compositions organopolysiloxanes à deux emballages, réticulant par fonction alcoxysilane, contenant un hydrorétenteur, et leur procédé de préparation.**

(57) Les compositions selon la présente invention, permettant l'obtention d'élastomères silicones réticulant à la température ambiante, sont caractérisées par le fait de comprendre un polymère constitué essentiellement de groupes acrylate et/ou méthacrylate d'un métal alcalin, en tant qu'hydrorétenteur.

Ces compositions sont préparées à partir d'empâtage contenant plus de 8 % d'eau, généralement entre 10 et 35 % d'eau.

EP 0 390 706 A1

# COMPOSITIONS ORGANOPOLYSILOXANES A DEUX EMBALLAGES, RETICULANT PAR FONCTION ALCOXYSILANE, CONTENANT UN HYDRORETENTEUR, ET LEUR PROCEDE DE PREPARATION

La présente invention concerne un procédé de préparation de compositions pour l'obtention d'élastomères silicones, par réaction dite de polycondensation, et plus particulièrement un procédé pour l'obtention de composition dites "bi-composantes", c'est-à-dire de compositions livrées dans deux emballages distincts, l'agent de réticulation utilisé étant choisi parmi :
i) au moins un tri et/ou tétraalcoxysilane,
2i) le produit de l'hydrolyse partielle d'au moins un des alcoxysilanes i). Avant d'utiliser une telle composition il est ainsi nécessaire de mélanger les constituants contenus dans deux emballages et la réticulation de la composition ainsi obtenue permet l'obtention d'un élastomère silicone par réaction de polycondensation.

De telles compositions, vulcanisables à la température ambiante ou plus généralement à des températures inférieures à 60 °C sont connues notamment par le brevet français 2 592 657 (voir pages 42 et suivantes) de la Société Rhône-Poulenc, qui décrit des compositions de ce type contenant un système catalytique à l'étain particulier.

Ces compositions "bi-composantes" comprennent :
- un premier emballage (partie n° 1) dans lequel se trouvent au moins :
a) une huile $\alpha,\omega$-dihydroxypolydiorganosiloxane ou un mélange de telles huiles de viscosités différentes,
b) une charge, le plus généralement consitutée de silice de combustion et/ou de précipitation, avantageusement traitée par exemple par de l'hexaméthyldisilazane ou par de l'octaméthylcyclotétrasiloxane,
c) une faible quantité d'eau, - et un deuxième emballage (partie n° 2) appelé parfois "système réticulant" comprenant par exemple :
d) un agent de réticulation, choisi parmi :
i) au moins un tri et/ou tétraalcoxysilane,
2i) le produit de l'hydrolyse partielle d'au moins un des alcoxysilanes i). e) un catalyseur de réticulation, g) avantageusement une huile triorganosiloxypolydiorganosiloxane et/ou un plastifiant organique.

Il est à noter que l'agent de réticulation peut éventuellement se trouver dans la partie n° 1 mais qu'il se trouve de préférence dans la partie n° 2.

Industriellement, pour la préparation de la partie n° 1 de telles compositions, les fabricants commencent généralement par réaliser un "empâtage", c'est-à-dire à mélanger de façon homogène les consituants a, b et c décrits ci-avant en s'efforçant d'obtenir un mélange (I) contenant le plus possible d'eau, ce mélange (I) devant pouvoir être conservé le plus longtemps possible (par exemple pendant 6 mois), en fonction des commandes des clients. Or il s'est avéré que ce mélange intime (I) pouvait difficilement en pratique contenir plus de 7 % en poids d'eau, car dans le temps le mélange (I) subit un phénomène de démixion, c'est-à-dire que l'eau de ce mélange (I) se met à décanter et à surnager. Il est alors nécessaire d'homogénéiser à nouveau mécaniquement ce mélange (I) avant de l'utiliser.

Pour obtenir la partie n° 1 définie ci-avant, les fabricants le plus généralement introduisent dans un mélange (II) contenant par exemple : une huile polysiloxane a) définie ci-avant, contenant éventuellement d'autres charges telles que par exemple du quartz broyé, et une huile polydiorganosiloxane à terminaisons triorganosiloxy, le mélange (I) en quantité telle que la partie n° 1 ainsi obtenue contienne en poids généralement entre 500 et 5 000 ppm (parties par million) d'eau, de préférence entre 1 000 et 4 000 ppm.

Ainsi les fabricants ont intérêt à ce que le mélange (I) ou "empâtage" décrit ci-avant contienne le plus possible d'eau sans que le mélange (1) subisse, pendant sa conservation, le phénomène de démixion de l'eau. Le fait d'obtenir de tels empâtages contenant des quantités d'eau plus importantes présente l'avantage, pour les fabricants, de pouvoir préparer et conserver des quantités moins importantes d'empâtages.

Un but de la présente invention est donc un procédé de préparation de compositions dites "bi-composantes" (c'est à dire à deux emballages) pour l'obtention d'élastomères silicones, l'agent de réticulation étant tel que défini ci-avant.

Un autre but de la présente invention est un procédé d'obtention de compositions telles que celles définies ci-dessus dans lequel on réalise un empâtage contenant plus de 7 % en poids d'eau.

Un autre but de la présente invention est un procédé d'obtention de compositions telles que définies ci-avant dans lequel le pourcentage en poids de l'eau dans l'empâtage est compris entre 8 et 35 %, de

préférence entre 10 et 30 %.

Un autre but de la présente invention est l'obtention de compositions "bi-composantes", telles que celles définies ci-avant, permettant l'obtention d'élastomères silicones ayant de bonnes propriétés physiques et mécaniques.

Il a maintenant été trouvé et c'est ce qui fait l'objet de la présente invention des compositions permettant l'obtention d'élastomères silicones caractérisées en ce qu'après mélange de leurs constituants situés dans deux emballages distincts elles comprennent au moins :

A - un $\alpha,\omega$-dihydroxypolydiorganosiloxane, de viscosité comprise entre 50 et 1 000 000 mPa.s à 25° C,

B - une charge minérale,

C - une faible quantité d'eau,

D - un agent de réticulation choisi parmi :

i) un silane de formule $(R^2)_k$ Si $(OR^1)_{4-k}$ dans laquelle les symboles $R^1$, identiques ou différents, représentent des radicaux alkyles en $C_1$ à $C_{12}$, des radicaux alkyles en $C_1$ à $C_{12}$ halogénés, des radicaux alcoxyalkylines en $C_3$ à $C_8$, le symbole $R^2$ représente un radical hydrocarboné en $C_1$ à $C_{10}$, le symbole k représente zéro ou un,

2i) les produits d'hydrolyse partielle du silane ci-dessus

E - un catalyseur de réticulation,

F - un polymère constitué essentiellement de groupes acrylate et/ou méthacrylate d'un métal alcalin, en tant qu'hydrorétenteur.

L'objet de la présente invention concerne également un procédé de préparation de telles compositions.

Les compositions selon la présente invention comprennent A) au moins un $\alpha,\omega$-dihydroxypolydiorganosiloxane dont la viscosité est comprise entre 50 et 1 000 000 mPa.s à 25° C, de préférence entre 60 et 800 000 mPa.s à 25° C.

Cet $\alpha,\omega$-dihydroxypolydiorganosiloxane a pour formule :

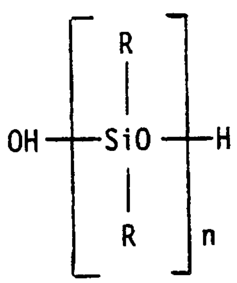

(1)

- dans laquelle les radicaux R, identiques ou différents, représentent des radicaux monovalents hydrocarbonés ayant de 1 à 10 atomes de carbone, éventuellement substitués par les atomes d'halogènes ou des groupes cyano. De préférence les radicaux R sont choisis parmi les radicaux méthyle, phényle, vinyle et trifluoro-3,3,3 propyle,
- dans laquelle n a une valeur telle que le polysiloxane de formule (1) ait une viscosité comprise entre 50 et 1 000 000 mPa.s.

Les radicaux R mentionnés ci-avant comprennent :
- les radicaux alkyles et halogénoalkyles ayant de 1 à 10 atomes de carbone tels que les radicaux méthyle, éthyle, propyle isopropyle, butyle, pentyle, hexyle, éthyl-2 hexyle, octyle, décyle, trifluoro-3,3,3 propyle, trifluoro-4,4,4 butyle, pentafluoro-4,4,4,3,3 butyle,
- les radicaux cycloalkyles et halogénocyloalkyles ayant de 1 à 10 atomes de carbone tels que les radicaux cyclopentyle, cyclohexyle, méthycyclohexyle, propylcyclohexyle, difluoro-2,3 cyclobutyle, difluoro-3,4 méthyl-5 cycloheptyle,
- les radicaux alcényles ayant de 2 à 4 atomes de carbone tels que les radicaux vinyle, allyle, butène-2 yle,
- les radicaux aryles et halogénoaryles mononucléaires ayant de 6 à 10 atomes de carbone tels que les radicaux phényle, totyle, xylyle, chlorophényle, dichlorophényle, trichlorophényle,
- les radicaux cyanoalkyles dont les chaînons alkyles ont de 2 à 3 atomes de carbone tels que les radicaux $\beta$-cyanoéthyle et -cyanopropyle.

A titre d'exemples concrets de motifs $R_2SiO$ présents dans l'alpha, oméga dihydroxydiorganopolysiloxane de formule (1) on peut citer :

$(CH_3)_2SiO$

$CH_3(CH_2=CH)SiO$

$CH_3(C_6H_5)SiO$
$(C_6H_5)_2SiO$
$CF_3CH_2CH_2(CH_3)SiO$ $NC\text{-}CH_2CH_2(CH_3)SiO$ $NC\text{-}CH_2CH_2(CH_2=CH)SiO$ $NC\text{-}CH_2CH_2(C_6H_5)SiO$

Il doit être compris que dans la composition selon la présente invention, on peut utiliser comme polymère de formule (1) un mélange constitué de polymères alpha, oméga-di(hydroxy)-diorganopolysiloxanes qui diffèrent entre eux par le poids moléculaire et/ou la nature des groupements liés aux atomes de silicium. Il doit être indiqué de plus que le polymère de formule (1) peut éventuellement comprendre des motifs monoorganosiloxy $RSiO_{1,5}$ et/ou des motifs $SiO_2$, dans la proportion d'au plus 2 % par rapport au nombre de motifs diorganosiloxy $R_2SiO$. En outre le diorganopolysiloxane peut être un homopolymère ou un copolymère de façon telle qu'il se trouve, par exemple, différents types de motifs dans la chaîne, tels que diméthyle, diphényle, méthyl-phényle, etc...

Ces polymères alpha, oméga-di(hydroxy)diorganopolysiloxanes sont commercialisés ; en outre, ils peuvent être aisément fabriqués selon les techniques maintenant bien connues.

Les compositions selon la présente invention comprennent au moins B) une charge minérale.

Ces charges peuvent se présenter sous la forme de produits très finement divisés dont le diamètre particulaire moyen est inférieur à 0,1 micromètre. Parmi ces charges figurent les silices de combustion et les silices de précipitation ; leur surface spécifique BET est généralement supérieure à 40 $m^2/g$.

Ces charges peuvent également se présenter sous la forme de produits plus grossièrement divisés, de diamètre particulaire moyen supérieur à 0,1 micromètre. Comme exemples de telles charges, on peut citer le quartz broyé, les silices de diatomées, le carbonate de calcium, l'argile calcinée, l'oxyde de titane du type rutile, les oxydes de fer, de zinc, de chrome, de zirconium, de magnésium, les différentes formes d'alumine (hydratée ou non), le nitrure de bore, le lithopone, le métaborate de baryum, le sulfate de baryum, les microbilles de verre ; leur surface spécifique est généralement inférieure à 30 $m^2/g$.

Ces charges peuvent avoir été modifiées en surface par traitement avec les divers composés organosiliciques habituellement employés pour cet usage. Ainsi ces composés organosiliciques peuvent être des organochlorosilanes, des diorganocyclopolysiloxanes, des hexaorganodisiloxanes, des hexaorganodisilazanes ou des diorganocyclopolysiloxanes (brevets français 1 126 884, 1 136 885, 1 236 505 ; brevet anglais 1 024 234). Les charges traitées renferment, dans la plupart des cas, de 3 à 30 % de leur poids de composés organosiliciques.

Les charges peuvent être constituées d'un mélange de plusieurs types de charges de granulométrie différente ; ainsi par exemple, elles peuvent être constituées de 30 à 70 % de silices finement divisées de surface spécifique BET supérieure à 40 $m^2/g$ et de 70 à 30 % de silices plus grossièrement divisées de surface spécifique inférieure à 30 $m^2/g$.

Pour 100 parties, en poids, du polymère A) $\alpha,\omega$-dihydroxypolydiorganosiloxane, les compositions selon la présente invention comprennent généralement entre 5 et 125 parties, de préférence entre 10 et 85 parties de charge(s) minérale(s).

Les compositions selon la présente invention contiennent une faible quantité d'eau. Généralement cette quantité d'eau est de, en poids, 500 à 5 000 ppm (parties par million) par rapport à la composition totale.

Les compositions selon la présente invention comprennent au moins un agent de réticulation D) tel que ceux mentionnés ci-avant, c'est-à-dire: i) un silane de formule $(R^2)_k\ Si\ (OR^1)_{4-k}$ (2) 2i) les produits d'hydrolyse partielle du silane ci-dessus.

Dans cette formule (2) $R^1$ est choisi parmi le groupe constitué par des radicaux alcoyle, halogénoalcoyle, aryle, halogénoaryle, alcènyle, cycloalcoyle, cycloalcènyle, cyanoalkyle.

Les radicaux R peuvent être des radicaux alcoyle tels que méthyle, éthyle, propyle, isopropyle, butyle, amyle, isoamyle, octyle, isooctyle, décyle, dodécyle ; des radicaux halogénoalcoyle tels que des radicaux alcoyle chloré, bromé, fluoré. En outre, $R^1$ peut représenter des radicaux aryle, aralcoyle et alcényle tels que vinyle, allyle, phényle, tolyle, xylyle, benzyle, phényléthyle, naphtyle, anthracyle, biphényle, aussi bien que les dérivés halogéno-substitués des radicaux sus-spécifiés. $R^1$ peut encore représenter des radicaux cycloalcényle, cycloalcoyle et cyanoalcoyle.

Lorsqu'on utilise un produit 2i résultant de l'hydrolyse partielle du silane de formule (2), de préférence on utilise un produit résultant de l'hydrolyse de silicate monomère, c'est-à-dire d'un silane de formule (2) dans laquelle k égale 0.

De tels produits 2i) sont obtenus en réalisant une hydrolyse partielle, dans de l'eau, de l'organosilicate particulier monomère en présence de petites proportions d'acide jusqu'à un point où il est encore insoluble dans l'eau et où il est encore possible d'isoler un composé liquide du type organosilicique partiellement hydrolysé. Ainsi, ce silicate d'éthyle possédant la formule $(C_2H_5O)_4Si$ peut être partiellement hydrolysé par addition d'acides ou de sels métalliques formant des acides tels que $FeCl_3$, $CuCl_2$, $AlCl_3$, $SnCl_4$ à l'organosilicate monomère liquide, puis mise en oeuvre d'une hydrolyse adéquate de ce mélange d'ingrédients dans de l'eau pour obtenir une composition à deux phases à partir de laquelle l'organosilicate partiellement hydrolysé, insoluble dans l'eau, est facilement séparable à partir de la phase aqueuse et du catalyseur. Un tel silicate d'éthyle partiellement hydrolysé est vendu dans le commerce sous la marque "Ethyl Silicate-40" par l'Union Carbide Corporation.

De manière générale le silicate utilisé est hydrolysé de façon telle que le produit liquide obtenu contienne moins de 10 %, avantageusement moins de 6 %, de silicate monomère non hydrolysé.

Les produits d'hydrolyse partielle du silane de formule $Si(OR^1)_4$ sont constitués, en majeure partie de motifs de formule $(R^1O)_2SiO$, les autres motifs ayant pour formules $(R^1O)_3SiO_{0,5}$, $(R^1O)SiO_{1,5}$, $SiO_2$.

Généralement dans la composition selon la présente invention on ajoute de 1 à 15 parties (en poids), de préférence de 2 à 12 parties de l'agent de réticulation D pour 100 parties de l'α,ω-dihydroxypolydiorganosiloxane A) dont la viscosité est comprise entre 500 et 1 000 000 mPa.s.

Comme exemples de silanes de formule (2) peuvent être désignés :
$CH_3Si(OCH_3)_3$, $CH_3Si(OC_2H_5)_3$, $C_2H_5Si(OCH_3)_3$, $CH_2=CH\ Si(OCH_3)_3$, $CH_2=CH\ Si(OCH_2\text{-}CH_2\text{-}OCH_3)_3$, $C_6H_5Si(OCH_3)_3$, $CN_3Si(OCH_3)_2\ OCH(CH_3)CH_2OCH_3$ , $Si(OCH_3)_4$, $Si(OC_2H_5)_4$, $Si(OC_3H_7)_4$, $Si(OC_4H_9)_4$.

Les compositions selon la présente invention comprennent E) au moins un catalyseur de réticulation. Parmi les nombreux catalyseurs connus susceptibles de convenir on peut citer notamment les carboxylates d'étain tels que le monooléate de tributylétain, l'héthyl 2 hexanoate d'étain ou des dicarboxylates de dialkylétain tels que le dilaurate de dibutylétain et le diacétate de dibutylétain. L'ouvrage de NOLL intitulé "Chemistry and technology of silicones" énumère un certain nombre de catalyseurs (page 397, 2e §, Academic Press, 1968 - 2e édition). Le catalyseur utilisé peut être également un bis(β-dicétonate) de diorganoétain tel que ceux revendiqués dans le brevet français n° 2 592 657 de la Société Rhône-Poulenc. Le catalyseur peut être également une amine avec ou sans sel d'étain.

La quantité de catalyseur utilisée est celle catalytiquement efficace. Généralement on utilise 0,01 à 10 parties, de préférence 0,1 à 8 parties, pour 100 parties de la composition selon la présente invention.

Le polymère F) utilisé, en tant qu'hydrorétenteur, dans les compositions selon la présente invention est constitué essentiellement de groupes acrylate et/ou méthacrylate d'un métal alcalin, en particulier de sodium.

Sont plus particulièrement préférés en tant que polymères F utilisés dans le cadre de la présente invention, les polymères d'acrylate d'un métal alcalin (en particulier de sodium) obtenus par le procédé de polymérisation en suspension aqueuse d'acide acrylique et d'acrylate de métal alcalin, tels que décrits notamment dans les brevets européens EP-A-36 463 et EP-A-83 022, cités comme références.

Dans les compositions selon la présente invention, le pourcentage, en poids, du polymère F est généralement supérieur à 0,001 % et inférieur à 5 %.

De tels polymères F) sont commercialisés par la Société NORSOLOR sous la marque AQUA-KEEP, notamment sous la référence 10 SH.P.

Les compositions selon la présente invention peuvent éventuellement comprendre d'autres composants, notamment :

G) un α,ω-triorganosiloxypolydiorganosiloxane, comme par exemple un α,ω-triméthylsiloxypolydiméthylsiloxane, dont la viscosité est généralement inférieure à 5 000 mPa.s à 25 °C, de préférence comprise entre 10 et 2 000 mPa.s. La quantité de l'huile G) est généralement comprise entre 0 et 150 parties, de préférence entre 8 et 120 parties, pour 100 parties, en poids, du polymère A) α,ω-dihydroxypolydiorganosiloxane.

H) un agent d'adhérence, à raison de 0 à 20 parties, de préférence de 0,2 à 15 parties, pour 100 parties (en poids) du polymère A) α,ω-dihydroxypolydiorganosiloxane. De préférence cet agent d'adhérence est choisi parmi les composés organosiliciques portant à la fois (1) des groupes organiques substitués par des radicaux choisis dans le groupe des radicaux amino, uréido, isocyanato, époxy, alkényle, isocyanurate, hydantoile, mercaptoester, et (2) des groupes hydrolysables liés aux atomes de silicium. De tels composés sont plus amplement décrits pages 29 et 30 dans le brevet FR 2 592 657 de la Société Rhône-Poulenc, cité en référence.

Les polymères α,ω-bis(triorganosiloxy)diorganopolysiloxanes décrits ci-avant sous G) peuvent être remplacés, totalement ou partiellement, par des composés organiques inertes vis-à-vis des constituants A, B, C, D, E et F et miscibles au moins avec les polymères α,ω-di(hydroxy)diorganopolysiloxanes (A).

Comme exemples de plastifiants organiques on peut en particulier citer des coupes pétrolières de point d'ébullition supérieure à 200 °C formées d'un mélange d'hydrocarbures aliphatiques et/ou aromatiques, des polybutylènes de préférence de faible poids moléculaire comme décrits dans les brevets français FR-A-2 256 231, FR-A-2 293 831 et FR-A-2 405 985, les produits d'alkylation du benzène en particulier les polyalkylbenzènes obtenus par alkylation du benzène par des oléfines à longue chaîne linéaire ou ramifiée, en particulier des oléfines à 12 atomes de carbone issues de la polymérisation du propylène comme

décrits par exemple dans le brevet français FR-A-2 446 849.

On peut également utiliser les polymères mixtes organiques polydiorganosiloxane tels que les copolymères à blocs polyoxyalkylènepolyorganosiloxane, des esters phosphoriques (FR-A-2 372 203), du phosphate de trioctyle (FR-A-2 415 132), des esters dialcooliques d'acides dicarboxyliques (US-A-2 938 007) et des cycloalkylbenzènes (FR-A-2 924 476).

Les produits d'alkylation du benzène, de poids moléculaire supérieur à 200, en particulier les alkylbenzènes et les polyalkylbenzènes sont les plastifiants organiques préférés.

Pour la préparation des compositions selon la présente invention on opère comme déjà décrit au début de la présente demande et comme cela est décrit et expliqué dans les exemples ci-après. On commence donc par réaliser un empâtage et il s'est avéré que pour préparer des empâtages comprenant plus de 8 % d'eau (en poids) il était avantageux que l'empâtage comprenne au moins 0,08 % du polymère F. D'autre part pour réaliser des empâtages comprenant 25 % d'eau il s'est avéré qu'il valait mieux utiliser plus de 0,25 % de polymère F) dans l'empâtage.

EXEMPLE 1 :

On commence par préparer les empâtages (ou mélanges I) A1 à A8 (voir tableau n° 1) en opérant de la façon suivante :

- dans un mélangeur à turbine on introduit tout d'abord les huiles $H_1$ et $H_2$ et la silice A 200. La masse est maintenue sous forte agitation (200 tours à la minute) jusqu'à l'obtention d'une masse homogène,
- on ajoute ensuite dans le mélangeur à turbine (selon les empâtages A1 à A8 préparés) l'hydrorétenteur (AQUA-KEEP) ou la gomme xanthane, ou la carboxyméthylcellulose et l'eau. Les masses ainsi obtenues sont alors dégazées (pour chasser les bulles) pendant 2 minutes sous 1,33 KPa (pression absolue), refroidies à 25° C et conservées à l'abri de l'air. Ces empâtages (ou mélanges I) A1 à A8 sont stockés à 25° C et on note dans le tableau I leur comportement dans le temps au bout de 2 mois, 4 mois et 6 mois.

Dans ce tableau n° 1 sont indiqués les pourcentages, en poids, de chaque constituant utilisé pour chaque empâtage A1 à A8 :

. huile H1 étant une huile α,ω-dihydroxypolydiméthylsiloxane de viscosité 70 000 mPa.s à 25° C,
. huile H2 étant une huile α,ω-dihydroxypolydiméthylsiloxane de viscosité 14 000 mPa.s à 25° C,
. AQUA-KEEP 10 SH.P étant un polymère acrylate de métal alcalin, commercialisé par la Société NORSOLOR,
. la gomme xanthane est celle commercialisée par la Société Rhône-Poulenc sous la marque RHODOPOL 23,
. la carboxyméthylcellulose utilisée sous la forme de son sel de sodium est commercialisée par la Société PROLABO,
. la silice A 200 est une silice de combustion de surface spécifique BET de $200m^2/g$, commercialisée par la Société DEGUSSA.

TABLEAU N° 1

| | A1 | A2 | A3 | A4 | A5 | A6 | A7 | A8 |
|---|---|---|---|---|---|---|---|---|
| huile H1 | 85,5 | 78,25 | 85,45 | 78,125 | 65,50 | 65,25 | 78,125 | 78,125 |
| huile H2 | 7,25 | 6,5 | 7,25 | 6,5 | 6,5 | 6,5 | 6,5 | 6,5 |
| Silice A 200 | 2,75 | 2,75 | 2,75 | 2,75 | 2,75 | 2,75 | 2,75 | 2,75 |
| AQUA-KEEP 10 SH.P | - | - | 0,045 | 0,125 | 0,25 | 0,5 | - | - |
| gomme xanthane | - | - | - | - | - | - | 0,125 | - |
| carboxyméthylcellulose | - | - | - | - | - | - | - | 0,125 |
| eau | 4,5 | 12,5 | 4,5 | 12,5 | 25 | 25 | 12,5 | 12,5 |
| rapport eau/hydrorétenteur | - | - | 100 | 100 | 100 | 50 | 100 | 100 |
| Stockage : 2 mois | S | D | S | S | S | S | D | D |
| 4 mois | S | D | S | S | S | S | D | D |
| 6 mois | S | D | S | S | D légère | S | D | D |
| S = stable<br>D = démixion de l'eau | | | | | | | | |

EXEMPLE 2 :

On prépare un mélange II, tel que défini au début de la description de la présente demande, avec les constituants suivants, en poids :
- 17,5 parties d'huile H1,
- 11,7 parties d'huile H2,
- 42,1 parties de quartz broyé de diamètre particulaire moyen de 10 microns,
- 0,4 parties d'huile H3, c'est-à-dire d'huile $\alpha,\omega$-dihydroxypolydiméthylsiloxane de viscosité 80 mPa.s à 25° C,
- 26,8 parties d'huile H4, c'est-à-dire d'huile $\alpha,\omega$-triméthylsiloxypolydiméthylsiloxane de viscosité 50 mPa.s à 25° C.

On introduit à 100 parties, en poids, du mélange II l'un des empâtages (mélanges I) A1 à $A_8$ en quantité telle que les mélanges B1 à B8 obtenus contiennent 0,15 % d'eau. L'incorporation de chaque empâtage A1 à A8 dans 100 parties de mélanges II dure environ 10 minutes. On obtient ainsi 8 mélanges B1 à B8 constituant 8 parties n° 1 (telles que définies au début de la description) de compositions selon la présente invention.

Pour obtenir la réticulation des mélanges B1 à B8 on ajoute à 100 parties de ces compositions 5 parties (en poids) du système réticulant dont la composition, en poids, est la suivante :
. huile $\alpha,\omega$-triméthylsiloxypolydiméthylsiloxane de viscosité 50 mPa.s à 25° C : 80 parties,
. polysilicate d'éthyle, marque "Ethyl Silicate 40" : 16 parties,
. dilaurate de dibutylétain : 4 parties.

La durée de l'incorporation du système réticulant dans les mélanges B1 à B8 est d'environ 2 minutes.

Il est à noter que ces 5 parties de système réticulant constitue la partie n° 2 de la composition selon notre présente invention, telle que définie au début de la description.

Les mélanges B1 à B8 sont utilisées tout de suite (ts = 0) après leur obtention, ou après avoir été stockées deux mois (ts = 2 mois), c'est-à-dire qu'on leur ajoute le système réticulant tout de suite après leur obtention ou après deux mois de stockage. Après l'ajout du système réticulant aux mélanges B1 à B8 on obtient les compositions C1 à C8 dont les compositions C3 à C6 sont celles selon la présente invention.

Pour évaluer les performances de telles compositions C1 à C8, celles-ci sont étalées sous forme d'une couche de 6 mm d'épaisseur sur des plaques de téflon. La couche de la composition déposée sur chaque plaque se transforme en bande caoutchouteuse. On mesure d'une part le temps to en minutes pendant lequel la composition est manipulable (c'est-à-dire le temps pendant lequel elle est coulable) ainsi que la dureté SHORE A (DSA) après 24 heures de réticulation.

Toutes les opérations sont effectuées sous atmosphère d'azote. Les résultats sont rassemblés dans le tableau n° 2 ci-après.

TABLEAU N° 2

| Compositions | C1 | C2 | C3 | C4 | C5 | C6 | C7 | C8 |
|---|---|---|---|---|---|---|---|---|
| Pour Ts = 0 | | | | | | | | |
| to<br>DSA (24 h) | 86<br>9 | 91<br>9,5 | 80<br>8,5 | 82<br>9 | 69<br>9 | 74<br>9 | 108<br>7 | 124<br>6 |
| Pour Ts = 2 mois | | | | | | | | |
| to<br>DSA (24 h) | 81<br>8,5 | 85<br>9 | 84<br>9,5 | 76<br>9 | 65<br>9,5 | 70<br>9,5 | D<br>D | D<br>D |
| D = démixion de l'eau en surface | | | | | | | | |

EXEMPLE 3 :

On prépare un mélange II, appelé mélange E, comprenant les constituants suivants :

- 100 parties d'huile H2, c'est-à-dire d'α,ω-dihydroxypolydiméthylsiloxane de viscosité 14 000 mPa.s,
- 70 parties d'huile H5, c'est-à-dire d'α,ω-triméthylsiloxypolydiméthylsiloxane de viscosité 100 mPa.s,
- 100 parties de carbonate de calcium traité par de l'acide stéarique.

On prépare d'autre part 3 mélanges I, appelés empâtage F1 à F3 dont la nature des constituants, ainsi que leurs quantités, en poids, sont indiquées dans le tableau n° 3 ci-après.

TABLEAU N° 3

| Constituants de chaque empâtage | F1 | F2 | F3 |
|---|---|---|---|
| huile H2 | 45 | 45 | 45 |
| huile H6 | 45 | 45 | 45 |
| Silice A 200 | 2,5 | 2,5 | 2,5 |
| AQUA-KEEP 10 SH.P | | 0,045 | 0,2 |
| TiO2 | 2,5 | 2,5 | 2,5 |
| eau | 4,5 | 4,5 | 20 |

L'huile H2, la silice A 200, l'AQUA-KEEP 10 SH.P ont déjà été définis à l'exemple 1.

L'huile H6 est un α,ω-triméthylsiloxypolydiméthylsiloxane de viscosité 1000 mPa.s à 25° C.

Le mode opératoire de préparation des empâtages F1 à F3 est identique à celui des empâtages A1 à A8 de l'exemple 1, le $TiO_2$ étant introduit avant l'eau et l'AQUA KEEP.

A 100 parties du mélange E (ou mélange II) on ajoute, environ en 10 minutes, x parties des empâtages F1, F2, F3 de manière à obtenir les mélanges G1, G2, G3 contenant 0,15 % en eau.

- Ainsi le mélange G1 comprend, en poids, 100 parties du mélange E + 3,5 parties du mélange F1
- le mélange G2 comprend 100 parties du mélange E + 3,5 parties du mélange (empâtage) F2
- le mélange G3 comprend 100 parties du mélange E + 0,755 parties du mélange F3.

Pour obtenir la réticulation des mélanges G1, G2 et G3, on ajoute à 100 parties, en poids, de chacun d'eux, 5 parties du système réticulant décrit à l'exemple 2. La durée d'incorporation du système réticulant dans les mélanges G1, G2 et G3 est d'environ 2 minutes. On obtient ainsi des compositions selon la présente invention C′1, C′2 et C′3.

Ces compositions C′1, C′2 et C′3 sont aussitôt étalées sous forme d'une couche de 6 mm d'épaisseur sur des plaques en téflon. La couche de la composition déposée sur chaque plaque se transforme en bande caoutchouteuse.

On mesure :

- le temps to, en minutes, pendant lequel la composition est manipulable,
- le temps tm au bout duquel la dureté SHORE A (DSA) est mesurable,
- la DSA après 8 heures,
- la DSA après 24 heures.

Les résultats sont consignés dans le tableau n° 4 ci-après.

TABLEAU N° 4

| Compositions | C'1 | C'2 | C'3 |
|---|---|---|---|
| to (mn) | 44 | 47 | 38 |
| tm | 6 h 30 | 6 h 30 | 5 h 45 |
| DSA 8 h | 8 | 7,5/8 | 7 |
| DSA 24 h | 13 | 13 | 14 |

**Revendications**

1. - Compositions permettant l'obtention d'élastomère silicones, caractérisées en ce qu'après mélange de leurs constituants situés dans deux emballages distincts, elles comprennent au moins :

A - un $\alpha$` $\omega$-dihydroxypolydiorganosiloxane, de viscosité comprise entre 50 et 1 000 000 mPa.s à 25° C,

B - une charge minérale,

C - une faible quantité d'eau,

D - un agent de réticulation choisi parmi :

i) un silane de formule $(R^2)_k$ Si $(OR^1)_{4-k}$ dans laquelle les symboles $R^1$, identiques ou différents, représentent des radicaux alkyles en $C_1$ à $C_{12}$, des radicaux alkyles en $C_1$ à $C_{12}$ halogénés, des radicaux alcoxyalkylènes en $C_3$ à $C_8$, le symbole $R^2$ représente un radical hydrocarboné en $C_1$ à $C_{10}$, le symbole k représente zéro ou un,

2i) les produits d'hydrolyse partielle du silane ci-dessus

E - un catalyseur de réticulation,

F - un polymère constitué essentiellement de groupes acrylate et/ou méthacrylate d'un métal alcalin, en tant qu'hydrorétenteur.

2. - Compositions selon la revendication 1, caractérisées en ce que le polymère F est un polymère d'acrylate d'un métal alcalin obtenu par le procédé de polymèrisation en émulsion aqueuse d'acide acrylique et d'acrylate de métal alcalin.

3. - Compositions selon l'une quelconque des revendications précédentes caractérisées en ce que le métal alcalin du polymère F est le sodium.

4. - Compositions selon l'une quelconque des revendications précédentes caractérisées en ce qu'elles comprennent au moins 0,001 %, en poids, de polymère F.

5. Compositions selon l'une quelconque des revendications précédentes caractérisées en ce qu'elles comprennent, en poids, au moins :

A : 100 parties d'au moins un $\alpha$` $\omega$-dihydroxypolydiorganosiloxane, de viscosité 50 à 1 000 000 mPa.s à 25° C,

B : 5 à 125 parties d'au moins une charge minérale,

C : 0,05 à 0,5 % d'eau,

D : 1 à 15 parties de l'agent de réticulation défini ci-avant,

E : une quantité efficace d'un catalyseur de réticulation,

F : au moins 0,001 % de polymère F.

6. - Compositions selon l'une quelconque des revendications précédentes caractérisées en ce que la charge minérale B est constitué, pour 30 à 70 % en poids, par de la silice de combustion et/ou de précipitation, de surface spécifique supérieure à 40 $m^2/g$.

7. - Compositions selon l'une quelconque des revendications 1 à 6,

- caractérisées en ce qu'elles sont obtenues par mélange de constituants contenus dans deux emballages

distincts, l'un des emballages, partie n° 2, contenant au moins le catalyseur de réticulation E et avantageusement l'agent de réticulation D, l'autre emballage appelé partie n° 1 contenant l'eau C, le polymère A, au moins une charge minérale B, le polymère F,
- caractérisées en ce que la partie n° 1 est obtenue en préparant tout d'abord un empâtage, ou mélange n° I, contenant au moins une partie de polymère A, au moins une partie de la charge B, l'eau C et le polymère F, que l'on ajoute à un mélange n° II pour obtenir la partie n° 1 définie ci-avant,
- caractérisées en ce que cet empâtage, ou mélange n° I, comprend, en poids, entre 8 et 35 % d'eau, entre 0,08 et 15 % de polymère F, et en ce qu'il est stable pendant au moins 6 mois.

8. - Compositions selon la revendication 7, caractérisées en ce que l'empâtage comprend entre 0,1 et 5 % de polymère F, en poids.

9. - Elastomères obtenus avec les compositions selon l'une quelconque des revendications précédentes.

Office européen des brevets

# RAPPORT DE RECHERCHE EUROPEENNE

Numero de la demande

EP 90 42 0124

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-4 725 648 (T. FUJIMOTO et al.)<br>* colonne 1, lignes 15,16,48-56; exemples 7-9; revendications 1,10-12 *<br>--- | 1,3-9 | C 08 L 83/04<br>C 08 L 33/02<br>C 08 K 5/54 |
| D,Y | FR-A-2 592 657 (RHONE-POULENC)<br>* page 42, ligne 15 - page 45, ligne 4; exemples 1,2 *<br>--- | 1,3-9 | |
| L | EP-A-0 314 584 (RHONE-POULENC)<br>* page 2, lignes 3-6; page 3, lignes 23,24; exemple 1, tableau I, colonnes B2,B3; exemples 6-8; revendications 1-4,6,9 *<br>----- | 1-9 | |

DOMAINES TECHNIQUES RECHERCHES (Int. Cl.5)

C 08 K
C 08 L

Le présent rapport a été établi pour toutes les revendications

| Lieu de la recherche | Date d'achèvement de la recherche | Examinateur |
|---|---|---|
| BERLIN | 08-06-1990 | HOEPFNER W.W.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant